# EUROPÄISCHE PATENTSCHRIFT

(11) **EP 2 121 174 B1**
(45) Veröffentlichungstag und Bekanntmachung des Hinweises auf die Patenterteilung: **24.10.2012**
(21) Anmeldenummer: 07856954.8
(22) Anmeldetag: 20.12.2007
(51) Int. Cl.: B01J 3/00, B01J 19/00

(54) **VERFAHREN UND VORRICHTUNG ZUR UMSETZUNG VON BIOMASSE IN GASFÖRMIGE PRODUKTE**
METHOD AND DEVICE FOR CONVERTING BIOMASS INTO GASEOUS PRODUCTS
PROCÉDÉ ET DISPOSITIF POUR TRANSFORMER UNE BIOMASSE EN PRODUITS GAZEUX

(30) Priorität: 13.01.2007 DE 102007002056
(43) Veröffentlichungstag der Anmeldung: 25.11.2009
(73) Patentinhaber: Karlsruher Institut für Technologie, 76131 Karlsruhe (DE)
(72) Erfinder: GOLDACKER, Hubert, 76344 Eggenstein-Leopoldshafen (DE); KRUSE, Andrea, 76646 Bruchsal (DE); DAHMEN, Nicolaus, 76646 Bruchsal (DE)
(74) Vertreter: Gärtner, Stephan
(86) Internationale Anmeldenummer: PCT/EP2007/011231
(87) Internationale Veröffentlichungsnummer: WO 2008/083823

(56) Entgegenhaltungen:
- WO-A-99/64112
- JP-A- 2000 084 576
- RAJA Y: "Gasification of waste to produce low-BTU gas by Molten Salt Technique" JOURNAL OF THE INSTITUTION OF ENGINEERS. INDIA. ELECTRICALENGINEERING DIVISION, INSTITUTION OF ENGINEERS, CALCUTTA, IN, Bd. 70, Nr. T2, 1. Januar 1989 (1989-01-01), Seiten 15-18, XP009099548 ISSN: 0020-3386 in der Anmeldung erwähnt

## Beschreibung

Die Erfindung betrifft ein Verfahren und eine Vorrichtung zur Umsetzung von nasser Biomasse, d.h. Biomasse mit einem Wassergehalt von mindestens 50 %, in gasförmige Produkte.

Bei der energetischen Nutzung nasser Biomasse über den Weg der Thermolyse werden häufig überkritisches Wasser mit Drücken und Temperaturen oberhalb des *kritischen Punktes des Wassers* (22,1 MPa und 374 °C) eingesetzt. Während überkritisches Wasser organische Substanzen gut auflöst, fallen anorganische Salze leicht aus und können eine Verstopfung des Reaktors bewirken.

Aus N. Boukis, U. Galla, V. Diem, E, Dinjus, Biomass gasification in supercritical water: First results of the pilot plant, in: A.V. Bridgewater, D.G.B. Boocock, Science in Thermal and Chemical Biomass Conversion, cplpress, Band 2, S. 975, 2006, ist ein schlanker Rohrreaktor bekannt, an dessen Boden sich die im überkritischen Wasser unlöslichen Salze aus der Biomasse sammeln sollen. Da die ausfallenden Salze klebrige bis körnige Konsistenz besitzen, sind nur letztere und nur teilweise durch Vorgänge wie z.B. Sedimentation abtrennbar. Bisher wird die nasse Biomasse in einem vorgeschalteten Wärmetauscher auf Reaktionstemperatur aufgeheizt. Dieses Verfahren ist langsam und setzt die Reaktion bereits im Wärmetauscherrohr in Gang, sobald die notwendige Temperatur erreicht ist.

In einer alternativen Ausgestaltung wird die vorgeheizte, konzentrierte Biomasse zusammen mit überkritischem Wasser in den Reaktor eingespeist. Hierzu ist unter Umständen ein ungünstiges Verhältnis von suspendierter Biomasse zu überkritischem Heizwasser erforderlich. Dadurch wird zwar der Aufheizvorgang beschleunigt und der Beginn der Reaktion in den Reaktor verlegt, jedoch fällt so der Hauptteil der Salze während des Betriebs im Reaktor unkontrolliert und schlecht entfernbar an.

Die US 4,822,497 offenbart einen Druckkessel als Reaktor für die Schadstoffoxidation in überkritischem Wasser, in dem dieselben Probleme bezüglich Salzbildung und -ausscheidung unter Reaktionsbedingungen auftreten. Um die unerwünschte und störende Akkumulation der Salze im Reaktor zu vermeiden, wird der Behälter im Bodenbereich mit einer Wasservorlage betrieben, die durch Quenchen auf einer Temperatur, die deutlich geringer als die kritische Temperatur ist, gehalten wird. Unter diesen Bedingungen lösen sich die Salze aus dem darüber liegenden Reaktionsraum wieder im Wasser. Die Oxidation in überkritischem Wasser ist stark exotherm und daher das Quenchen energetisch vertretbar. Die Vergasung von Biomasse ist demgegenüber endotherm und daher ein Quenchen energetisch nicht vertretbar.

Gemäß Y. Raja, Gasification of waste to produce low-BTU gas by Molten Salt Technique, J. Institution of Engineers India, Band 70, Part T2, S. 15, 1989, werden bei der Biomasse-Vergasung in trockenen Salzschmelzen hohe Umsätze erzeugt, allerdings entsteht hierbei viel Kohlenmonoxid. Zusätzlich muss ein Shift-Konverter nachgeschaltet werden, um Wasserstoff zu erzeugen. Außerdem lässt sich bei Umsetzungen in trockenen Salzschmelzen die Bildung von Holzkohle bzw. Koks nicht vollständig verhindern.

Die DE 202 20 307 U1 offenbart eine Anlage zur Behandlung von fließfähigen Stoffen in überkritischem Wasser, die aus einem zylinderförmigen Reaktor mit Druckleitungen zur Eduktzuführung und Produktableitung besteht, wobei die Produktableitung als Steigrohr ausgebildet ist, das von oben in den Reaktorraum ragt und im unteren Drittel des Reaktors endet, und am unteren Ende des Reaktors ein Sumpfabzug angebracht ist, der an der engsten Stelle liegt und einen Kühler und eine Ventilanordnung zum (dis-)kontinuierlichen Sumpfabzug aufweist.

Die US 6,878,479 B2 offenbart eine Vorrichtung zur direkten Umwandlung von Brennstoffen in elektrische Energie, wobei elektrochemische Zellen, in denen sich jeweils ein geschmolzener Elektrolyten befindet, derart in einer bipolaren, gekippten Konfiguration angeordnet sind, dass der elektrische Widerstand zwischen den Zellen minimal wird.

Aus der US 2005/0066573 A1 ist ein Verfahren zur thermischen Zersetzung von Graphitfasern und Polymerkompositen in einer inerten Atmosphäre bekannt, worin zunächst eine Vielzahl von Graphitfasern, die an ein verkohltes Material gebunden sind, hergestellt und anschließend das verkohlte Material mittels elektrochemischer Oxidation in einer Salzschmelze von den Graphitfasern abgetrennt werden.

Die EP 1 686 192 A1 offenbart ein Verfahren zur Herstellung von Mono - oder Oligosacchariden aus einem Polysaccharid, worin das Polysaccharid in einer hydrothermalen Reaktion in heißem Wasser, dem zuvor Kohlendioxid mittels Druck hinzugefügt wurde, bei einem Druck von 5 bis 100 MPa und einer Temperatur von 140 bis 300 °C hydrolysiert wird.

Aus G. Lee, T. Nunoura, Y. Matsumura und K. Yamamoto, Comparison of the Effects of the addition of NaOH on the decomposi tion of 2-chlorophenol and phenol in supercritical water and under supercritical water oxidation conditions, J. Supercritical Fluids, Band 24, S. 239-250, 2002, ist bekannt, dass der Einfluss von NaoH auf die Zersetzung von organischen Verbindungen bei der Bestimmung der optimalen Reaktionsbedingungen und des optimalen Reaktordesigns berücksichtigt werden muss.

D.D. MacDonald und L.B. Kriksunov beschreiben in ihrem Übersichtsartikel Probing the chemical and electrochemical properties of the SCWO system, Electrochimica Acta, Band 47, S. 775-790, 2001, Vorteile des und Hindernisse beim Einsatz von überkritischer Oxidation in Wasser (*supercritical water oxidation,* SCWO). Die Vorteile von SCWO gegenüber Verbrennung liegen im Einsatz von geschlossenen Zyklen bei der Durchführung der Reaktion und in der höheren Zersetzungseffizienz. Letztere wird jedoch durch eine höhere Korrosivität gegenüber üblichen Materialien erkauft.

Aus K. Pripopsky, B. Wellig und Ph.R. von Rohr, SCWO of salt containing artificial wastewater using a transpiring wall reactor: Experimental results, J. Supercritical Fluids, Band 40, S. 246-257, 2007, über Science Direct verfügbar ab 07.07. 2007, ist ein Reaktoraufbau bekannt, der über zwei verschiedene teildurchlässige Wandelemente verfügt, womit sich das Problem des Reaktorfaulens und der Verstopfung durch Salzausfällungen vermeiden lassen.

M. Hodes, P.A. Marrone, G.T. Hong, K.A. Smith und J.W. Tester beschreiben in Salt precipitation and scale control in supercritical water oxidation, Part A: Fundamentals and research, J. Supercritical Fluids, Band 29, S. 265-288, 2004, die Prinzipien der Salzausfällung die Skalierung bei höheren Temperaturen und Drücken, Phasendiagramme des Salz-Wasser-Systems und sich hieraus ergebende Phänomene.

In Z. Sun, F. Takahashi, Y. Odaka, k. Fukushi, Y. Oshima und K. Yamamoto, Effects of potassium alkalis and sodium alkalis on the dechlorination of o-chlorophenol in supercritical water, Chemosphere, Band 66, S. 151-157, 2007, online ab dem 29. 06.2006 verfügbar, wird der Einfluss von Kalium- und Natrium-Alkalien auf die Entchlorinierung von o-Chlorophenol in überkritischem Wasser beschrieben.

M.D. Bermejo, A. Martin, L.J. Florusse, C.J. Peters und M.J. Cocero beschreiben in The influence of Na2SO4 on the CO2 solubility in water at high pressure, Fluid Phase Equilibria, Band 238, S. 220-228, 2005, die effektive Zersetzung von organischem Abfall am Beispiel von Na₂SO₄ in überkritischem Wasser. Hierbei wurden Zersetzungsraten von über 99 % bei Aufenthaltszeiten von weniger als 1 Minute beobachtet.

Aus M.D. Bermejo, A. Martín, L.J. Florusse, C.J. Peters und M.J. Cocero, Bubble points of the systems isopropanol-water, isopropanol-water-sodium acetate and isopropanol-water-sodium oleate at high pressure, Fluid Phase Equilibria, Band 244, S. 78-85, 2006, ist bekannt, dass die Oxidation in überkritischem Wasser eine wirkungsvolle Technik für die Zersetzung von organischem Abfall mit hohem Ausbeute darstellt. Sobald genügend kationen vorhanden sind, fallen vorhandene Heteroatome in Form von Salzen aus und lassen sich schließlich wiedergewinnen.

Ausgehend hiervon ist es die Aufgabe der vorliegenden Erfindung, ein Verfahren und eine Vorrichtung vorzuschlagen, die die genannten Nachteile und Einschränkungen nicht aufweisen. Insbesondere sollen die thermolytische Zersetzung der Biomasse und die Entstehung zusätzlicher Salze aus der Biomasse erst innerhalb des Reaktors erfolgen, damit die zusätzlichen Salze direkt am Ort ihrer Entstehung gebunden werden können.

Diese Aufgabe wird im Hinblick auf das Verfahren durch die Schritte des Anspruchs 1 und im Hinblick auf die Vorrichtung durch die Merkmale des Anspruchs 6 gelöst. Die Unteransprüche beschreiben jeweils vorteilhafte Ausgestaltungen.

Das erfindungsgemäße Verfahren wird in einem Druckreaktor bei einem Druck oberhalb des kritischen Drucks des Wassers, bevorzugt oberhalb von 22,5 MPa, der in einem ersten Schritt a) bereitgestellt wird, durchgeführt. Im Bodenbereich des Reaktors befindet sich eine ausreichend ausgedehnte, stationäre Salzschmelze.

Der Schmelzpunkt des für die Salzschmelze eingesetzten Salzes oder der hierfur eingesetzten Salzmischung muss unterhalb der Reaktionstemperatur liegen, bei der die Biomasse in ein gasförmiges Produkt umgesetzt wird. Die Reaktionstemperatur beträgt in der Regel 550 °C bis 700 °C.

Als Salze eignen sich vorzugsweise Alkalisalze, besonders bevorzugt Alkalinitrate, Alkalihydroxide, Alkalicarbonate oder Alkalihydrogencarbonate, die wasserhaltige Schmelzen mit niedrigen Schmelzpunkten bilden. Beispiele für geeignete Salzmischungen sind eine 50:50-Mischung aus NaNO₃ und KNO₃ (Schmelzpunkt 223 °C) oder eine 56:44-Mischung aus LiNO₃ und KNO₃ (Schmelzpunkt 125 °C). Ein Beispiel für ein geeignetes Salz ist KOH mit einem Schmelzpunkt von 360 °C.

Die für die Salzschmelze eingesetzten Salze bzw. Salzmischungen besitzen darüber hinaus vorzugsweise die folgenden Eigenschaften:
- Sie weisen eine ausreichende thermische Stabilität für Temperaturen bis zu 700 °C auf.
- Sie besitzen eine möglichst geringe Korrosivität.
- Der Schmelzpunkt ändert sich durch den Eintrag von weiteren Salzen aus der Umsetzung der Biomasse nur insoweit, dass die Verfahrensführung nicht wesentlich beeinträchtigt wird.
- Die Viskosität stellt die Fließfähigkeit der Salzschmelze im Reaktor sicher.
- Die spezifische Wärme erlaubt die rasche Aufheizung der vorgeheizten Biomasse durch den Kontakt mit der Salzschmelze.

Der Reaktor und die darin befindliche Salzschmelze werden gemäß Schritt b) von außen auf die Reaktionstemperatur, die zur Umsetzung der Biomasse in gasförmige Produkte erforderlich ist, aufgeheizt. Das Aufheizen erfolgt z.B. durch Rauchgase.

Die Biomasse wird gemäß Schritt c) zunächst in einem Wärmetauscher auf eine Vorheiztemperatur, bei der noch keine störende Zersetzung der organischen Verbindungen einsetzt, aufgeheizt. Anschließend wird die derart aufgeheizte Biomasse über ein Einspeiserohr, das in die Salzschmelze eintaucht, in die Salzschmelze eingeleitet, die aufgrund ihrer Unlöslichkeit im überkritischen Wasser eine zweite, wasserreiche Salzphase bildet.

In diesem Salzbad wird nun gemäß Schritt c) die Biomasse rasch auf die Reaktionstemperatur aufgeheizt. Die eingespeiste Menge an Biomasse und die Menge der Salzschmelze sind dabei vorzugsweise derart aufeinander abgestimmt, dass bereits während der Kontaktzeit der beiden Medien eine möglichst schnelle Aufheizung der Biomasse auf die Reaktionstemperatur stattfindet.

Dadurch kommt die Thermolyse der Biomasse innerhalb kürzester Zeit in Gang und der Biomassekohlenstoff steht in geeigneter Form zur Wasserspaltung (sog. *Wassergas-Shift-Reaktion*) zur Verfügung.

Die bei der Thermolyse der Biomasse gemäß Schritt c) freiwerdenden Salze werden in der Salzschmelze festgehalten. Der Reaktor ist dabei so ausgestaltet, dass die Ausbildung eines Salzschmelzenfilms verhindert wird. Ein Salzschmelzenfilm gleicht den aus der Verdampfertechnik bekannten Fallfilmen, besteht aus der gleichen Salzschmelze wie im Bodenbereich des Reaktors und ruft eine Verkrustung der inneren Oberfläche des Reaktors durch ausfallende Biomassesalze (nachgelagerte thermolytische Reaktionen) im überkritischem Plenum des Reaktors hervor.

Gemäß Schritt d) wird vorzugsweise in periodischen Abständen ein mit den aus der Biomasse stammenden Salzen angereicherter Teil der Salzschmelze über einen Abzug am Boden des Reaktors abgezogen. Die entnommene Salzmenge wird durch frische Salzmischung ersetzt.

Gemäß Schritt e) werden die gasförmigen Produkte über ein Auslassrohr aus dem Reaktor entnommen.

Eine erfindungsgemäße Vorrichtung zur Umsetzung von Biomasse mit einem Wassergehalt von mindestens 50 % in gasförmige Produkte, enthält mindestens die folgenden Bestandteile:
- einen Druckreaktor, der bei einem Druck oberhalb des kritischen Drucks des Wassers, bevorzugt oberhalb von 22,5 MPa betrieben werden kann und der sich zur Aufnahme einer Salzschmelze eignet,
- eine Heizung, die zur Aufheizung des Reaktors und der sich hierin befindlichen Salzschmelze auf die Reaktionstemperatur, die zur Umsetzung der Biomasse in gasförmige Produkte erforderlich ist, geeignet ist,

- ein erstes Einspeiserohr, das in die Salzschmelze eintaucht, zur Zuführung der Biomasse, die auf eine Vorheiztemperatur, bei der noch keine Zersetzung der organischen Verbindungen in der Biomasse auftritt, erhitzt wurde, in den Reaktor,
- ein zweites Einspeiserohr zur Zuführung von Wasser und Salzlösung in den Reaktor,
- ein Auslassrohr zur Ausleitung der gasförmigen Reaktionsprodukte aus dem Reaktor und
- einen Abzug im Boden des Reaktors zum Abziehen von Teilen der Salzschmelze, die mit den weiteren aus der Biomasse heraus gelangten Salzen angereichert ist, aus dem Reaktor.

Vorzugsweise ist vor dem Auslassrohr ein Rohrreaktor vorgeschaltet, der den gasförmigen Produkten Wärme entzieht.

Vorzugsweise ist am Abzug im Boden des Reaktors ein beheizbares Ventil vorgesehen, das sich insbesondere zum Steuern des periodischen Abziehens von Teilen der Salzschmelze eignet.

Das erfindungsgemäße Verfahren weist insbesondere die folgenden Vorteile auf:
- Die thermolytische Zersetzung der Biomasse und damit die Entstehung der zusätzlichen Salze aus der Biomasse setzen erst oberhalb der Vorheiztemperatur innerhalb des Reaktors ein, so dass die Salze direkt am Ort der Entstehung gebunden werden können.
- Die Bindung der Salze aus der Thermolyse der Biomasse erfolgt in der vorgelegten Salzschmelze, die gleichzeitig als Wärmequelle zum Aufheizen der vorgeheizte Biomasse auf die Reaktionstemperatur dient.
- Umfasst die Salzschmelze ein Alkalisalz oder eine Salzmischung, bei der mindestens eine Komponente ein Alkalisalz ist, so kann während der Erwärmung in der Salzschmelze von der Vorheiz- auf Reaktionstemperatur zusätzlich die Reaktivität der Biomasse derart erhöht werden, dass ein möglichst vollständiger Umsatz der in der Biomasse enthaltenen gebundenen Kohlenstoffatome zu CO₂ und CH₄ erreicht wird.
- Die gebundenen Salze lassen sich ohne Beeinträchtigung des Betriebs aus dem Reaktor entfernen.

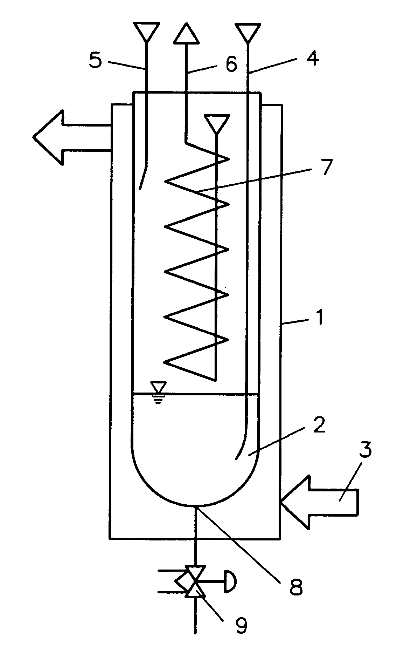

Die Erfindung wird im Folgenden anhand eines Ausführungsbeispiels und der Figur näher erläutert.

In der **Figur** ist ein Ausführungsbeispiel für eine erfindungsgemäße Vorrichtung zur Durchführung des erfindungsgemäßen Verfahrens dargestellt.

In einen schlanken Druckreaktor **1** wird eine Salzschmelze **2** eingeführt, die mittels einer Heizung **3** auf eine Reaktionstemperatur aufgeheizt werden. Über ein erstes Einspeiserohr **4**, das in die Salzschmelze **2** eintaucht, wird die auf eine Vorheiztemperatur, bei der noch keine störende Zersetzung der organischen Verbindungen in der Biomasse auftritt, aufgeheizte Biomasse in den Reaktor **1** eingeführt. Ein zweites Einspeiserohr **5**, das im vorliegenden Fall nicht in die Salzschmelze eintaucht, dient zur Zuführung von Wasser und Salzlösung in den Reaktor **1**. Ein Auslassrohr **6**, das im vorliegenden Fall ebenfalls nicht in die Salzschmelze eintaucht, ist zur Ausleitung der gasförmigen Reaktionsprodukte aus dem Reaktor **1** vorgesehen. In dieser Ausgestaltung ist dem Auslassrohr **6** ein Rohrreaktor **7** vorgeschaltet. Im Boden des Reaktors **1** befindet sich ein Abzug **8** zum Abziehen von Teilen der Salzschmelze **2**, die mit den weiteren aus der Biomasse heraus gelangten Salzen angereichert ist, aus dem Reaktor **1**. Das vorzugsweise periodische Abziehen von Teilen der Salzschmelze **2** aus dem Reaktor **1** wird bevorzugt über ein beheizbares Ventil **9** gesteuert.

## Patentansprüche

1. Verfahren zur Umsetzung von Biomasse, die einen Wassergehalt von mindestens 50 % aufweist, in gasförmige Produkte, aufweisend die **Schritte**
a) Bereitstellen eines Reaktors (1), in dem sich überkritisches Wasser und eine Salzschmelze (2) befinden, wobei die Salzschmelze (2) aus einem Salz oder einer Salzmischung mit einem Schmelzpunkt unterhalb einer Reaktionstemperatur, die zur Umsetzung der Biomasse in gasförmige Produkte erforderlich ist, besteht,
b) Aufheizen des Reaktors (1) und der Salzschmelze (2) auf die Reaktionstemperatur,
c) Aufheizen der Biomasse auf eine Vorheiztemperatur, bei der noch keine störende Zersetzung der organischen Verbindungen in der Biomasse auftritt, und Einspeisen der derart aufgeheizten Biomasse in die Salzschmelze (2) über ein erstes Einspeiserohr (4), das in die Salzschmelze (2) eintaucht, wodurch die Biomasse weiter auf die Reaktionstemperatur aufgeheizt wird, so dass die Umsetzung der Biomasse in gasförmige Produkte eintritt und durch die erfolgte Umsetzung weitere Salze aus der Biomasse heraus in der Salzschmelze (2) gelangen,
d) Abziehen von Teilen der Salzschmelze (2), die mit den weiteren aus der Biomasse heraus gelangten Salzen angereichert ist, aus dem Reaktor (1) und Ersetzen der entnommenen Menge an Salzschmelze (2) durch eine frische Salzlösung, und
e) Entnehmen der gasförmigen Produkte über ein Auslassrohr (6) aus dem Reaktor (1).

2. Verfahren nach Anspruch 1, wobei die Menge an Biomasse und die Menge an Salzschmelze derart aufeinander abgestimmt sind, dass während der Kontaktzeit der Biomasse mit der Salzschmelze die Aufheizung der Biomasse auf die Reaktionstemperatur stattfindet.

3. Verfahren nach Anspruch 1 oder 2, wobei ein Alkalisalz als Salz oder als Bestandteil der Salzmischung eingesetzt wird.

4. Verfahren nach Anspruch 3, wobei ein Alkalinitrat, Alkalihydroxid, Alkalicarbonat oder Alkalihydrogencarbonat als Salz oder als Bestandteil der Salzmischung eingesetzt wird.

5. Verfahren nach einem der Ansprüche 1 bis 4, wobei das Abziehen von Teilen der Salzschmelze (2) periodisch erfolgt.

6. Vorrichtung zur Umsetzung von Biomasse, die einen Wassergehalt von mindestens 50 % aufweist, in gasförmige Produkte, **aufweisend**
- einen Reaktor (1) zur Aufnahme von überkritischem Wasser und einer Salzschmelze (2),
- eine Heizung (3) zur Aufheizung des Reaktors (1) und der Salzschmelze (2) auf die Reaktionstemperatur,
- ein erstes Einspeiserohr (4), das in die Salzschmelze (2) eintaucht, zur Zuführung der Biomasse in den Reaktor (1),
- ein zweites Einspeiserohr (5) zur Zuführung von Wasser und Salzlösung in den Reaktor (1),
- ein Auslassrohr (6) zur Ausleitung der gasförmigen Produkte aus dem Reaktor (1) und
- einen Abzug (8) im Boden des Reaktors (1) zum Abziehen von Teilen der Salzschmelze (2) aus dem Reaktor (1).

7. Vorrichtung nach Anspruch 6, wobei dem Auslassrohr (6) ein Rohrreaktor (7) vorgeschaltet ist.

8. Vorrichtung nach Anspruch 6 oder 7, wobei ein beheizbares Ventil (9) zur Steuerung des Abzugs (8) im Boden des Reaktors (1) vorgesehen ist.

## Claims

1. Method for converting biomass having a water content of at least 50% into gaseous products, comprising the steps:
a) providing a reactor (1) in which supercritical water and molten salt (2) are located, wherein the molten salt (2) is made of a salt or a salt mixture having a melting point below a reaction temperature that is required for converting the biomass into gaseous products,
b) heating the reactor (1) and the molten salt (2) to the reaction temperature,
c) heating the biomass to a preheat temperature at which no interfering decomposition of the organic compounds in the biomass occurs, and feeding the biomass thus heated into the molten salt (2) via a first feed pipe (4) which is immersed in the molten salt (2), as a result of which the biomass is further heated to the reaction temperature so that the conversion of the biomass into gaseous products begins and, due to the conversion that has taken place, further salts migrate from the biomass into the molten salt (2),
d) withdrawing portions of the molten salt (2), which is enriched with the further salts that have migrated out of the biomass, from the reactor (1) and replacing the removed quantity of molten salt (2) with a fresh salt solution, and
e) removing the gaseous products from the reactor (1) via a discharge pipe (6).

2. Method according to claim 1, wherein the quantity of biomass and the quantity of molten salt are tailored to one another so that the heating of the biomass to the reaction temperature takes place during the time that the biomass is in contact with the molten salt.

3. Method according to claim 1 or 2, wherein an alkali salt is used as the salt or as a component of the salt mixture.

4. Method according to claim 3, wherein an alkali nitrate, alkali hydroxide, alkali carbonate or alkali hydrogen carbonate is used as the salt or as a component of the salt mixture.

5. Method according to any one of claims 1 to 4, wherein the withdrawing of portions of the molten salt (2) takes place periodically.

6. Device for converting biomass having a water content of at least 50% into gaseous products, comprising:
- a reactor (1) for holding supercritical water and molten salt (2),
- a heater (3) for heating the reactor (1) and the molten salt (2) to the reaction temperature,
- a first feed pipe (4), which is immersed in the molten salt (2), for feeding the biomass into the reactor (1),
- a second feed pipe (5) for feeding water and salt solution into the reactor (1),
- a discharge pipe (6) for conducting the gaseous products out of the reactor (1), and
- a drain (8) in the base of the reactor (1) for withdrawing portions of the molten salt (2) from the reactor (1).

7. Device according to claim 6, wherein a tube reactor (7) is arranged upstream of the discharge pipe (6).

8. Device according to claim 6 or 7, wherein a heatable valve (9) for controlling the drain (8) is provided in the base of the reactor (1).

## Revendications

1. Procédé permettant de transformer une biomasse ayant une teneur en eau d'au moins 50 % en des produits gazeux comportant les étapes consistant à :
a) préparer un réacteur (1) contenant de l'eau sur-critique et une masse saline fondue (2), cette masse saline fondue (2) étant constituée d'un sel ou d'un mélange de sels ayant un point de fusion situé au-dessous de la température réactionnelle nécessaire pour transformer la biomasse en des produits gazeux,
b) chauffer le réacteur (1) et la masse saline fondue (2) à la température réactionnelle,
c) chauffer la biomasse à une température de préchauffage pour laquelle aucune décomposition inopportune des composés organiques présents dans la biomasse ne se produit encore et introduire la biomasse ainsi chauffée dans la masse saline fondue (2) par une première tubulure d'alimentation (4) qui plonge dans la masse saline fondue (2), la biomasse étant alors chauffée à la température réactionnelle, de sorte que la transformation de la biomasse en des produits gazeux se produise, et que, suite à cette transformation d'autres sels provenant de la biomasse parviennent dans la masse saline fondue (2),
d) soutirage du réacteur (1), de parties de la masse saline fondue (2) enrichie en autres sels provenant de la biomasse, et remplacement de la quantité de masse saline fondue (2) soutirée par une solution saline fraiche, et
e) extraction des produits gazeux du réacteur (1) par une tubulure de sortie (6).

2. Procédé conforme à la revendication 1,
**caractérisé en ce que**
la quantité de biomasse et la quantité de masse saline fondue sont adaptées l'une à l'autre de sorte que pendant le temps de contact de la biomasse avec la masse saline fondue, la biomasse soit chauffée à la température réactionnelle.

3. Procédé conforme à la revendication 1 ou 2, selon lequel on utilise un sel alcalin en tant que sel ou en tant que composant du mélange salin.

4. Procédé conforme à la revendication 3, selon lequel on utilise un nitrate alcalin, un hydroxyde alcalin, un carbonate alcalin ou un hydro-gèno carbonate alcalin en tant que sel ou en tant que composant du mélange salin.

5. Procédé conforme à l'une des revendications 1 à 4, selon lequel le soutirage d'une partie de la masse saline fondue (2) est effectué périodiquement.

6. Dispositif permettant de transformer une biomasse ayant une teneur en eau d'au 50 % en des produits gazeux comprenant :
- un réacteur (1) de réception d'eau sur-critique et d'une masse saline fondue (2),
- un organe de chauffage (3) pour chauffer le réacteur (1) et la masse saline fondue (2) à la température réactionnelle,
- une première tubulure d'alimentation (4) qui plonge dans la masse saline fondus (2) pour introduire la biomasse dans le réacteur (1),
- une seconde tubulure d'alimentation (5) pour introduire de l'eau et une solution saline dans le réacteur (1),
- une tubulure de sortie (6) pour extraire les produits gazeux du réacteur (1), et
- un organe de soutirage (8) situé au fond du réacteur (1) pour soutirer des parties de la masse saline fondue (2) du réacteur (1).

7. Dispositif conforme à la revendication 6, dans lequel un réacteur tubulaire (7) est monté en amont de la tubulure de sortie (6).

8. Dispositif conforme à la revendication 6 ou 7, dans lequel une soupape (9) susceptible d'être chauffée est prévue pour la commande de l'organe de soutirage (8) au fond du réacteur (1).
